# EUROPÄISCHE PATENTSCHRIFT

(11) **EP 1 010 462 B1**
(45) Veröffentlichungstag und Bekanntmachung des Hinweises auf die Patenterteilung: **06.05.2004**
(21) Anmeldenummer: 99121726.6
(22) Anmeldetag: 03.11.1999
(51) Int. Cl.: B01J 12/00, B01J 10/00, B01J 14/00, B01J 19/24, B01J 35/04, H01M 8/06, C01B 3/38

(54) **Vorrichtung zur katalytischen Umsetzung eines Ausgangsstoffes, insbesondere eines Gasgemisches**
Device for the catalytic conversion of a feedstock, particularely of a gas mixture
Dispositif pour la conversion catalytique d'un composant, specifiquement d'un mélange gazeux

(30) Priorität: 19.12.1998 DE 19858974
(43) Veröffentlichungstag der Anmeldung: 21.06.2000
(73) Patentinhaber: DaimlerChrysler AG, 70567 Stuttgart (DE)
(72) Erfinder: Docter, Andreas, Dr., 88471 Laupheim (DE); Strobel, Barbara, 89160 Dornstadt (DE); Wiesheu, Norbert, 89312 Günzburg (DE)

(56) Entgegenhaltungen:
- EP-A- 0 305 203
- US-A- 5 328 774
- US-A- 5 762 887
- PATENT ABSTRACTS OF JAPAN vol. 012, no. 222 (M-712), 24. Juni 1988 (1988-06-24) & JP 63 018123 A (FUJI HEAVY IND LTD), 26. Januar 1988 (1988-01-26)

## Beschreibung

Die vorliegende Erfindung betrifft ein Verfahren zur katalytischen Umsetzung eines Ausgangsstoffes, insbesondere eines Flüssigkeits- oder Gasgemisches, nach dem Oberbegriff des Patentanspruchs 1, sowie eine Verwendung einer Vorrichtung zur katalytischen Umsetzung eines Ausgangsstoffes nach dem Oberbegriff des Patentanspruches 6.

Monolithische Strukturen aus Keramik oder Metall als Katalysatorträger finden in der katalytischen Behandlung von Gasvolumenströmen bereits seit längerem Verwendung. Diese Monolithen weisen eine Kanalstruktur auf, wobei eine große Anzahl von Kanälen parallel, d.h. insbesondere wabenförmig, angeordnet ist. Die Wabenstrukturen werden beispielsweise im Abgasstrom eines Verbrennungsmotors positioniert. Auf den mit dem katalytischen Material beschichteten Wabenstrukturen laufen dann die zur Abgasreinigung notwendigen chemischen Reaktionen ab. Zur Erzielung eines möglichst großen Umsatzes (angestrebt ist ein Umsatz von 100%) der Abgase muß dem Gasvolumenstrom eine entsprechende Reaktionsoberfläche angeboten werden. Dies wird üblicherweise durch ein entsprechend hohes Reaktionsvolumen oder eine vergrößerte katalytisch aktive Oberfläche (beispielsweise bei bekannten Metallmonolithträgern durch die Erhöhung der Zellfläche) erreicht.

Auch für autotherme Reformierungsprozesse, beispielsweise zur Bereitstellung von Wasserstoff in der Brennstoffzellentechnik, bietet sich die Verwendung monolithischer Kanalstrukturen an. Im Reformierungsreaktor werden zwei Zonen unterschieden: eine exotherme Zone mit partieller Oxidationsreaktion und einer endotherme Zone für eine Reformierungsreaktion. Beide Zonen sind nicht streng hintereinander geschaltet, sondern können sich überlagern. Ausgangsstoff für die Zerlegung von Kohlenwasserstoffen in H₂-reiches Reformat können flüssige und gasförmige Kohlenwasserstoffe sein. Um eine exotherme Reaktion einzuleiten, muß Sauerstoff (zumeist Luft) hinzugefügt werden; weiters wird je nach Bedarf Wasser der Reaktion hinzugefügt, um eine komplette Umwandlung des Kohlenwasserstoffs in CO bzw. CO₂ zu erreichen. Ziel einer optimalen Umsetzung der Edukte ist, maximale Mengen von H2 und CO im Reaktor zu erzeugen. In nachgeschalteten Komponenten (katalytische Shiftstufen) wird das CO mit H₂O zu CO₂ und H₂ umgewandelt.

Man beobachtet bei einer derartigen katalytischen Reaktion die folgenden Effekte: Während der exothermen Reaktion kommt es zu einem Anstieg des Betriebsvolumenstroms, und durch die chemische Reaktion zu einem Anstieg des Absolutvolumenstroms. In der endothermen Reaktionszone nimmt der Betriebsvolumen-strom wieder ab.

Als nachteilig bei herkömmlichen Katalysatorstrukturen erweist sich, daß aufgrund des angestrebten vollständigen Umsatzes eine sehr große Lauflänge und damit ein großes Bauvolumen bzw. Katalysatorvolumen zur Verfügung gestellt werden muß. Derartige Reformierreaktoren, welche einen entsprechend großen Bauraum benötigen, sind beispielsweise aus der DE 41 30 718 A1 und der DE 196 45 855 A1 bekannt.

Aus der EP 04 18 122 A1 ist es bekannt, den Querschnitt länglich ausgebildeter katalytischer Reaktoren zu variieren. Die hierdurch zur Verfügung gestellten Reaktoren bauen jedoch sehr groß.

Aufgabe der Erfindung ist die Bereitstellung eines Verfahrens zur Umsetzung von Ausgangsstoffen sowie einer Verwendung einer Vorrichtung zur katalytischen Umsetzung eines Ausgangsstoffes, bei welchen bei minimalem Bauvolumen bzw. minimaler Masse eine vollständige Umsetzung der Ausgangsstoffe möglich ist. Ferner werden minimale Druckverluste in dem durch die Vorrichtungen strömenden Ausgangsstoffstrom angestrebt.

Diese Aufgabe wird gelöst durch ein Verfahren mit den Merkmalen des Patentanspruchs 1, sowie eine Verwendung mit den Merkmalen des Patentanspruchs 6.

Erfindungsgemäß ist es nun möglich, einen Reaktor bzw. einen Katalysator zur Verfügung zu stellen, der gegenüber herkömmlichen Katalysatoren durch Minimierung der benötigten Oberfläche des katalytischen Materials sowie der Menge des katalytischen Materials eine geringere absolute Baugröße als herkömmliche Reaktoren aufweist. Ferner sind mittels der erfindungsgemäßen Vorrichtung bei der katalytischen Umsetzung auftretende Druckverluste wirksam verringerbar. Ferner ist mittels der erfindungsgemäßen Zunahme der dem umzusetzenden Stoff entgegentretenden Oberfläche des katalytischen Materials in wirksamer Weise eine eingangsseitige Begrenzung des Umsatzes möglich. Hierdurch kann gewährleistet werden, daß nicht bereits unmittelbar nach Eintreten in den Reaktor eine zu große Umsetzung erfolgt, wodurch eine Vermeidung allzu hoher Temperaturen bzw. Belastungen an der Eingangsseite des Reaktors vermeidbar sind.

Dabei weist die erfindungsgemäß verwendete Vorrichtung wenigstens eine erste Reaktionszone, in der die dem Ausgangsstoff entgegentretende wirksame Reaktionsfläche des katalytischen Materials zur Durchführung einer partiellen Oxidation bei der autothermen Reformierung von Kohlenwasserstoffen relativ klein, und wenigstens eine zweite Zone, in der die dem Ausgangsstoff entgegentretende wirksame Reaktionsfläche pro Volumeneinheit zur Durchführung einer endothermen Reformierung des partiell oxidierten Ausgangsstoffes relativ groß ist, auf. Hiermit ist es möglich, bei einem Brennstoffzellenantrieb eines Kraftfahrzeugs die notwendigen Reaktoren zur Durchführung einer autothermen Reformierung sehr klein auszubilden, wodurch das Gewicht des Brennstoffzellenantriebs insgesamt verkleinerbar ist. Das erfindungsgemäße Prinzip der Erhöhung der einem umzusetzenden Ausgangsstoff entgegentretenden wirksamen Reaktionsoberfläche eines katalytischen Materials über die Länge des Reaktors ist jedoch nicht auf die autotherme Reformierung von Kohlenwasserstoffen beschränkt. Unter Anwendung des gleichen Prinzips ist es beispielsweise möglich, Reaktoren in der Wassergas-Shiftstufe sowie der CO-Oxidation, welche ebenfalls in der Brennstoffzellentechnik eingesetzt werden, in der beschriebenen Weise zu optimieren. Es ist ebenfalls möglich, einen katalytischen Brenner, welcher zur Verbrennung von aus der Brennstoffzelle austretendem, nicht umgesetztem Wasserstoff dient, erfindungsgemäß auszubilden. Insbesondere bei katalytischen Brennern erweist es sich als besonders vorteilhaft, daß durch Bereitstellung einer relativ geringen Reaktionsoberfläche an seiner Eingangsseite der anfängliche bzw. eingangsseitige Umsatz von Wasserstoff wirksam begrenzt werden kann, wodurch die Gleichmäßigkeit der Reaktion und damit u.a. die Dauerbelastbarkeit des katalytischen Brenners verbessert werden kann.

Vorteilhafte Ausgestaltungen der erfindungsgemäßen Vorrichtung sind Gegenstand der Unteransprüche.

Zweckmäßigerweise nimmt die Reaktionsoberfläche entsprechend einem Konzentrationsgefälle des abreagierenden Ausgangsstoffes zwischen der Eingangsseite der Vorrichtung und der Ausgangsseite der Vorrichtung zu. Mit dieser Maßnahme kann die Katalysatorwirkung bezüglich der Parameter Umsatz und Druckverlust zur Gewährleistung eines minimalen Bauraums und eines minimalen Katalysatormaterialeinsatzes optimiert werden. Es ist insbesondere möglich, die Oberflächenabstufung derart zu gestalten, daß die Reaktionsoberfläche direkt proportional zur Konzentrationsabnahme des umzusetzenden Ausgangsstoffes über die Länge des Reaktors erhöht wird.

Gemäß einer bevorzugten Ausführungsform der vorliegenden Erfindung dient eine eine Kanal- bzw. Zellstruktur aufweisende monolithische Struktur aus Keramik oder Metall als Träger des katalytischen Materials, wobei die Zunahme der Reaktionsoberfläche pro Volumeneinheit durch Verkleinerung der hydraulischen Querschnitte und/oder Verkleinerung der Materialwandstärke der Kanalstruktur zur Schaffung einer erhöhten Zelldichte bewerkstelligt wird. Monolithische Strukturen aus Keramik oder Metall finden in der Katalysatortechnik weite Verwendung und erweisen sich in der Praxis als sehr robust und zuverlässig. Das erfindungsgemäße Prinzip ist auch im Falle von Keramikschäumen bzw. Metallgeweben als Trägermaterial verwendbar.

Zweckmäßigerweise weist die erfindungsgemäße Vorrichtung wenigstens eine Mischzone zur Homogenisierung von Konzentrationsunterschieden des abreagierenden Ausgangsstoffes auf. Mit dieser Maßnahme ist ein besonders flexibler Betrieb der erfindungsgemäßen Vorrichtung möglich, da im Falle einer durchgängigen Kanalstruktur lediglich ein Umsatz entsprechend einer zugeführten Ausgangsstoffrate möglich ist.

Gemäß einer besonders bevorzugten Ausführungsform der erfindungsgemäßen Vorrichtung weist diese eine erste eingangsseitige Reaktionszone mit einer Zelldichte von 300 bis 500 cpsi, vorzugsweise 400 cpsi (cells per square inch: Zellen pro Quadratzoll), eine hieran anschließende zweite Reaktionszone mit einer Zelldichte von 500 bis 700 cpsi, vorzugsweise 600 cpsi, und eine dritte, ausgangsseitige Reaktionszone mit einer Zelldichte von 700 bis 900 cpsi, vorzugsweise 800 cpsi auf. Derartige Zelldichten sind standardmäßig verfügbar und in besonders preiswerter Weise einsetzbar.

Eine bevorzugte Ausführungsform der erfindungsgemäßen Vorrichtung wird nun anhand der beigefügten Zeichnung im einzelnen erläutert. In dieser zeigt
- Fig. 1: eine schematische seitliche Schnittansicht einer bevorzugten Ausführungsform der erfindungsgemäßen Vorrichtung,
- Fig. 2: ein Schaubild zur Darstellung des Umsatzes der Vorrichtung gemäß Fig. 1 im Vergleich mit einer herkömmlichen, nicht segmentierten Vorrichtung,
- Fig. 3: ein Schaubild zur Darstellung des Umsatzes als Funktion der Reaktorlänge bzw. der bereitgestellten wirksamen Reaktionsoberfläche bei nichtsegmentierten Reaktoren gemäß dem Stand der Technik, und
- Fig. 4: eine schematische seitliche Schnittansicht einer bevorzugten Ausführungsform eines statischen Mischers.

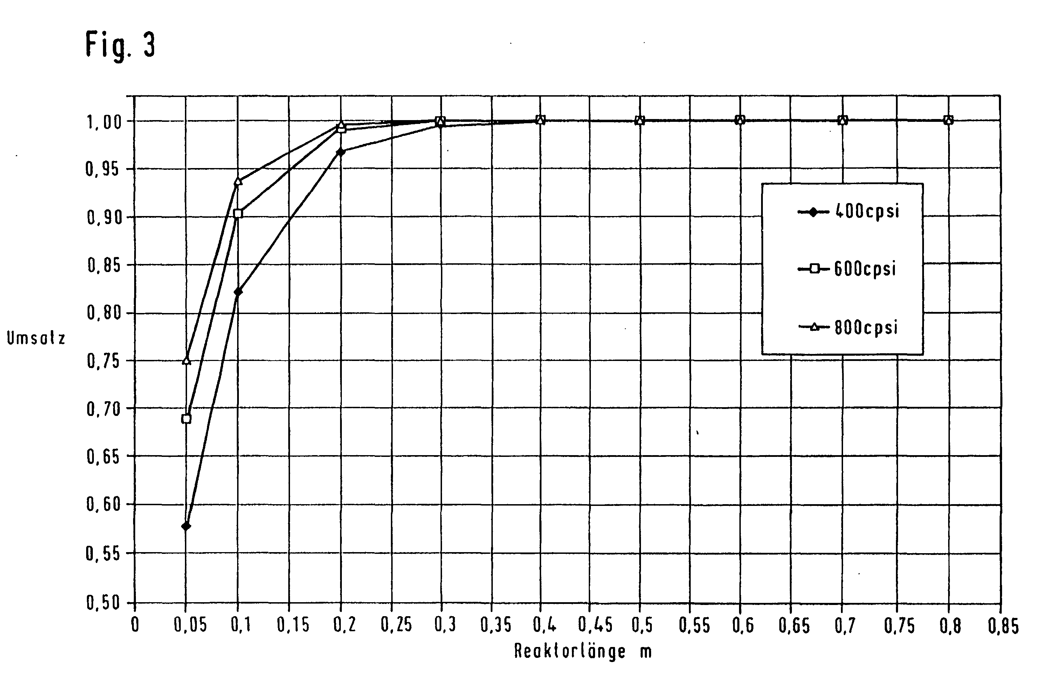

In Fig. 3 ist der erzielbare Umsatz des Ausgangsstoffes eines autothermen Reaktors als Funktion der Reaktorlänge für verschiedene Zelldichten angegeben. Man erkennt, daß bei höheren Zelldichten (600 bzw. 800 cpsi) bereits bei einer Reaktorlänge von 0,2 m eine etwa 99 %ige Umsetzung des Ausgangsstoffes erreicht ist, bei einer Zelldichte von 400 cpsi ist hingegen eine Länge von etwa 0,3 m notwendig.

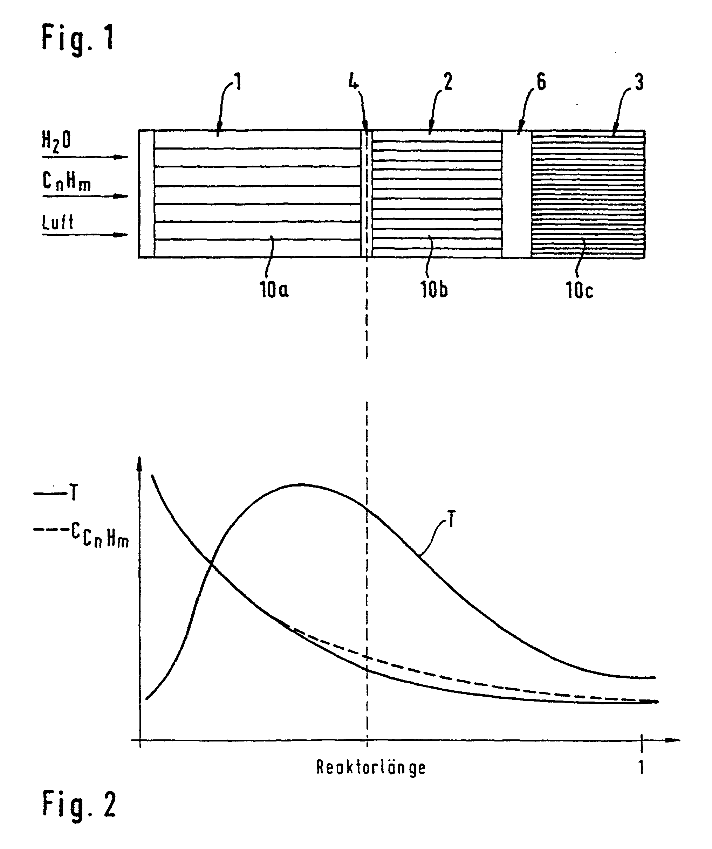

Der in Fig. 1 dargestellte Reaktor ist in drei Reaktionszonen 1, 2, 3 unterteilt. Hierbei ist die Zone 1 eingangsseitig angeordnet. Zur autothermen Reformierung von flüssigen Kohlenwasserstoffen werden in die Zone 1 des Reaktors entsprechende Kohlenwasserstoffe CₙHₘ, H₂O und Luft zugegeben. Die Reaktionszonen 1, 2, 3 sind mit von feinen Kanälen durchzogenen Wabenkörpern 10a, 10b, 10c (keramische oder metallische Monolithe) ausgebildet, welche als Trägermaterial für das verwendete katalytische Material, beispielsweise ein geeignetes Edelmetall, dienen.

Unter Bezugnahme auf Fig. 2 erkennt man, daß in der Zone 1 aufgrund der erfolgenden partiellen exothermen Oxidation, in der z.B. Benzin mit Wasserdampf oder Luft unter Energieabgabe partiell oxidiert wird, ein starker Temperaturanstieg stattfindet.

Die Reaktionszone 1 weist eine Kanal- bzw. Zelldichte von 400 cpsi auf. Durch die exotherme Reaktion in der Zone 1 steigt hier der Betriebsvolumenstrom besonders stark an. Ferner steigt durch die chemische Reaktion der Absolutvolumenstrom an. Durch die relativ geringe Zelldichte bzw. die relativ großen Kanalquerschnitte in der Zone 1 kommt es zu geringen Strömungsverlusten, wobei gleichzeitig, aufgrund der in der Zone 1 sehr hohen Kohlenwasserstoffkonzentation, für die katalytische Reaktion genügend Oberfläche zur Verfügung gestellt ist.

An die Reaktionszone 1 schließt sich eine Mischzone 4 an, in welcher eine Homogenisierung von Konzentrationsunterschieden bewirkt wird. Im Falle eines zylindrisch ausgebildeten Reaktors ist es besonders vorteilhaft, diese Mischzonen als zylinderscheibenförmige Aussparungen innerhalb des Reaktorgehäuses auszubilden.

An die Mischzone 4 schließt sich eine weitere Reaktionszone 2 an, in welcher die Zelldichte gegenüber der ersten Zone 1 auf 600 cpsi erhöht ist. Anhand der Fig. 2 erkennt man, daß in der Reaktionszone 2 die Reaktionstemperatur T bereits wieder stark abnimmt. In dieser Reaktionszone 2 kommt es verstärkt zu einer endothermen Reformierung, in der die partiell oxidierten Volumenstromanteile des Ausgangsstoffes weiter in ein CO- und H₂reiches Gas zerlegt werden. Durch die vergrößerte Reaktionsoberfläche bzw. Erhöhung der Zelldichte ist dem bereits partiell oxidierten Ausgangsstoff eine ausreichende Oberfläche für einen raschen Restumsatz zur Verfügung gestellt. Durch den hier auftretenden geringeren Betriebsvolumenstrom kommt es zu geringeren Strömungsverlusten als in der Reaktionszone 1.

An die Reaktionszone 2 schließt sich wiederum eine Mischzone 6 an, die entsprechend der Mischzone 4 ausgebildet ist. Zur vollständigen Umsetzung des Ausgangsstoffes ist eine dritte Reaktionszone 3 vorgesehen, welche sich ausgangsseitig an die zweite Mischzone 6 anschließt. Die dritte Reaktionszone weist eine Zelldichte von 800 cpsi auf. Hierdurch ist auch für die hier sehr kleine Kohlenwasserstoffkonzentration eine ausreichende Oberfläche zur effektiven Durchführung eines weiteren Umsatzes zur Verfügung gestellt.

Ein Vergleich der Kohlenwasserstoffkonzentration an der Ausgangsseite der erfindungsgemäßen segmentierten Vorrichtung mit derjenigen einer Vorrichtung entsprechender Länge, welche über ihre gesamte Länge eine Zelldichte von 400 cpsi aufweist, ist ebenfalls in Fig. 2 dargestellt. Die CₙHₘ-Konzentration des erfindungsgemäßen Reaktors ist mit durchgezogener, diejenige des Reaktors gemäß dem Stand der Technik mit gestrichelter Linie eingezeichnet. Man erkennt, daß durch die Verwendung der erfindungsgemäßen segmentierten Vorrichtung bei gleicher Baulänge eine wesentlich geringere Kohlenwasserstoffkonzentration erreicht wird. Erst bei wesentlich größeren Reaktorlängen kommt es zu einer Angleichung der erzielbaren Konzentration.

Somit kann insgesamt bei gleichem Umsatz (es sei von einem Umsatz von 99,999 % ausgegangen) die absolute Baugröße des Reaktors verringert und gleichzeitig die auftretenden Druckverluste minimiert werden. Ferner sind die benötigten Katalysatoroberfläche sowie die benötigte Katalysatormenge minimiert.

Das erfindungsgemäße Prinzip kann analog beispielsweise bei statischen Mischern angewendet werden. Es wird beispielsweise eingangsseitig bzw. anfänglich zur Erzielung hoher Umsätze eine Mischergeometrie vorgeschlagen, die große Kanäle mit kleinen Strömungswinkeln aufweist (wobei hier als Winkel die axiale Strömungsachse bezüglich der Strömungsführung definiert ist). Hierdurch ist eingangsseitig eine geringe Durchmischung bei gleichzeitigem minimalem Druckverlust gewährleistet. Schließen sich hieran gestaffelt Stufen mit kleineren Kanalquerschnitten bzw. erhöhten Strömungswinkeln an, welche dem zu mischenden Stoff eine größere Oberfläche entgegensetzen, kommt es zu einer stärkeren Durchmischung, wobei ein etwas erhöhter Druckverlust in Kauf genommen werden kann.

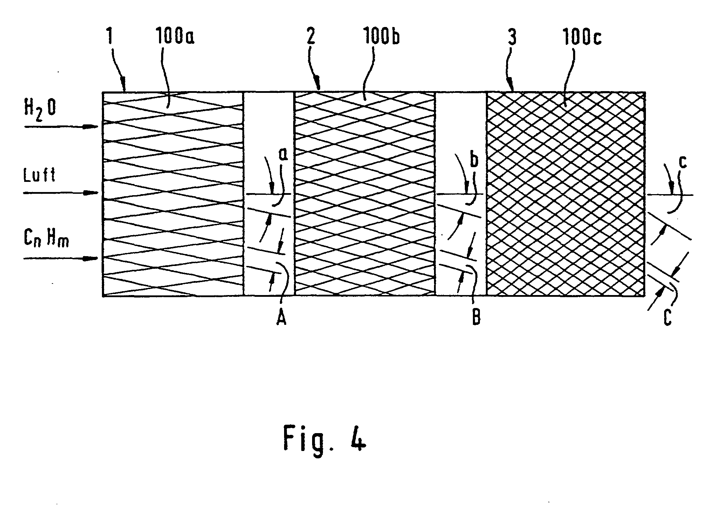

Ein derartiger statischer Mischer ist in Fig. 4 dargestellt. Hierbei werden die Ausgangsstoffe H₂O, Luft und CₙHₘ dem Mischer von links zugeführt. Die einzelnen Zonen des statischen Mischers sind, analog zur beschriebenen Vorrichtung zur katalytischen Umsetzung, mit 1, 2, 3 bezeichnet. Die Kanalquerschnitte der Zone 1 weisen einen Querschnitt auf, der mit A bezeichnet ist, und definieren bezüglich der Strömungs- bzw. Längsachse des Mischers einen Winkel a. Man erkennt, daß die Kanalquerschnitte der zweiten Zone 2 kleinere Kanalquerschnitte B sowie einen größeren Winkel b bezüglich der Strömungsachse aufweisen. In analoger Weise weist die Zone 3 wiederum Kanalquerschnitte C auf, welche kleiner als die Kanalquerschnitte B der zweiten Zone 2 sind. Die Kanäle der Zone 3 bilden bezüglich der Strömungsachse einen Winkel c, welcher größer als der Winkel b ist.

## Patentansprüche

1. Verfahren zur katalytischen Umsetzung eines Ausgangsstoffes, insbesondere eines Flüssigkeits- oder Gasgemisches, mittels autothermer Reformierung, wobei der Ausgangsstoff zwischen einer Eingangsseite der Vorrichtung und einer Ausgangsseite der Vorrichtung mit einem katalytischen Material in Wirkverbindung gebracht wird, und die dem umzusetzenden Ausgangsstoff entgegentretende wirksame Reaktionsoberfläche des katalytischen Materials pro Volumeneinheit von der Eingangsseite zur Ausgangsseite der Vorrichtung hin stufenweise oder kontinuierlich zunimmt, wobei das katalytische Material auf einem Trägermaterial aufgebracht ist, welche als eine eine Zell- bzw. Kanalstruktur aufweisende monolithische Struktur aus Keramik oder Metall ausgebildet ist, und die Zunahme der Reaktionsoberfläche pro Volumeneinheit durch Verkleinerung der hydraulischen Querschnitte und/oder Verkleinerung der Materialwandstärke der Kanalstruktur zur Schaffung einer erhöhten Zelldichte des katalytischen Materials bewerkstelligt wird,
**dadurch gekennzeichnet,**
**dass** in wenigstens einer ersten Reaktionszone (1), in welcher die dem Ausgangsstoff entgegentretende wirksame Reaktionsfläche kleiner als in wenigstens einer nachfolgenden zweiten Reaktionszone (2, 3) ist, eine partielle Oxidation von Kohlenwasserstoffen durchgeführt wird, und in wenigstens einer zweiten Reaktionszone (2, 3), in welcher die wirksame Reaktionsfläche größer als in wenigstens einer vorhergehenden ersten Reaktionszone (1) ist, eine endotherme Reformierung zur weiteren Zerlegung des partiell oxidierten Ausgangsstoffes in ein CO- und H₂-reiches Gas durchgeführt wird.

2. Verfahren nach Anspruch 1,
**dadurch gekennzeichnet,**
**dass** die Reaktionsoberfläche entsprechend einem Konzentrationsgefälle des abreagierenden Ausgangsstoffes zwischen der Eingangsseite und der Ausgangsseite der Vorrichtung zunimmt.

3. Verfahren nach Anspruch 1 oder 2,
**dadurch gekennzeichnet,**
**dass** eine eine Zell- bzw. Kanalstruktur aufweisende monolithische Strukur aus Keramik oder Metall als Trägermaterial (10a, 10b, 10c) des katalytischen Materials dient, wobei die Zunahme der Reaktionsoberfläche pro Volumeneinheit durch Verkleinerung der hydraulischen Querschnitte und/oder Verkleinerung der Materialwandstärke der Kanalstruktur zur Schaffung einer erhöhten Zelldichte des katalytischen Materials bewerkstelligt wird.

4. Verfahren nach Anspruch 1, 2 oder 3,
**dadurch gekennzeichnet,**
**dass** wenigstens eine Mischzone (4, 6) zur Homogenisierung von Konzentrationsunterschieden des abreagierenden Ausgangsstoffes eingesetzt wird.

5. Verfahren nach einem der vorstehenden Ansprüche,
**dadurch gekennzeichnet,**
**dass** eine erste eingangsseitige Reaktionszone (1) mit einer Zell- bzw. Kanaldichte von 300 bis 500, vorzugsweise 400 cpsi, eine sich hieran anschließende zweite Reaktionszone (2) mit einer Zelldichte von 500 bis 700, vorzugsweise 600 cpsi, und ausgangsseitig eine dritte Reaktionszone (3) mit einer Zelldichte von 700 bis 900, vorzugsweise 800 cpsi, eingesetzt wird.

6. Verwendung einer Vorrichtung zur katalytischen Umsetzung eines Ausgangsstoffes, insbesondere eines Flüssigkeits- oder Gasgemisches, mittels autothermer Reformierung, wobei der Ausgangsstoff zwischen einer Eingangsseite der Vorrichtung und einer Ausgangsseite der Vorrichtung mit einem katalytischen Material in Wirkverbindung gebracht wird, und die dem umzusetzenden Ausgangsstoff entgegentretende wirksame Reaktionsoberfläche des katalytischen Materials pro Volumeneinheit von der Eingangsseite zur Ausgangsseite der Vorrichtung hin stufenweise oder kontinuierlich zunimmt, wobei das katalytische Material auf einem Trägermaterial aufgebracht ist, welche als eine eine Zell- bzw. Kanalstruktur aufweisende monolithische Struktur aus Keramik oder Metall ausgebildet ist, und die Zunahme der Reaktionsoberfläche pro Volumeneinheit durch Verkleinerung der hydraulischen Querschnitte und/oder Verkleinerung der Materialwandstärke der Kanalstruktur zur Schaffung einer erhöhten Zelldichte des katalytischen Materials bewerkstelligt wird,
**dadurch gekennzeichnet,**
**dass** in wenigstens einer ersten Reaktionszone (1), in welcher die dem Ausgangsstoff entgegentretende wirksame Reaktionsfläche kleiner als in wenigstens einer nachfolgenden zweiten Reaktionszone (2, 3) ist, eine partielle Oxidation von Kohlenwasserstoffen durchgeführt wird, und in wenigstens einer zweiten Reaktionszone (2, 3), in welcher die wirksame Reaktionsfläche größer als in wenigstens einer vorhergehenden ersten Reaktionszone (1) ist, eine endotherme Reformierung zur weiteren Zerlegung des partiell oxidierten Ausgangsstoffes in ein CO- und H₂-reiches Gas durchgeführt wird.

7. Verwendung nach Anspruch 6,
**dadurch gekennzeichnet,**
**dass** die Reaktionsoberfläche entsprechend einem Konzentrationsgefälle des abreagierenden Ausgangsstoffes zwischen der Eingangsseite und der Ausgangsseite der Vorrichtung zunimmt.

8. Verwendung nach Anspruch 6 oder 7,
**dadurch gekennzeichnet,**
**dass** eine eine Zell- bzw. Kanalstruktur aufweisende monolithische Strukur aus Keramik oder Metall als Trägermaterial (10a, 10b, 10c) des katalytischen Materials dient, wobei die Zunahme der Reaktionsoberfläche pro Volumeneinheit durch Verkleinerung der hydraulischen Querschnitte und/oder Verkleinerung der Materialwandstärke der Kanalstruktur zur Schaffung einer erhöhten Zelldichte des katalytischen Materials bewerkstelligt wird.

9. Verwendung nach Anspruch 6, 7 oder 8,
**dadurch gekennzeichnet,**
**dass** wenigstens eine Mischzone (4, 6) zur Homogenisierung von Konzentrationsunterschieden des abreagierenden Ausgangsstoffes eingesetzt wird.

10. Verwendung nach einem der vorstehenden Ansprüche,
**dadurch gekennzeichnet,**
**dass** eine erste eingangsseitige Reaktionszone (1) mit einer Zell- bzw. Kanaldichte von 300 bis 500, vorzugsweise 400 cpsi, eine sich hieran anschließende zweite Reaktionszone (2) mit einer Zelldichte von 500 bis 700, vorzugsweise 600 cpsi, und ausgangsseitig eine dritte Reaktionszone (3) mit einer Zelldichte von 700 bis 900, vorzugsweise 800 cpsi, eingesetzt wird.

## Claims

1. Method for the catalytic conversion of a starting substance, in particular of a liquid or gas mixture, by means of autothermal reforming, in which the starting substance, between an entry side of the device and an exit side of the device, is brought into active contact with a catalytic material, and the active reaction surface area of the catalytic material per unit volume which comes into contact with the starting substance to be converted increases in steps or continuously from the entry side to the exit side of the device, the catalytic material being applied to a support material, which is designed as a monolithic structure made from ceramic or metal and having a cell or passage structure, and the increase in the reaction surface area per unit volume being effected by a reduction in the hydraulic cross section and/or a reduction in the material wall thickness of the passage structure in order to create an increased cell density in the catalytic material, **characterized in that** a partial oxidation of hydrocarbons is carried out in at least one first reaction zone (1), in which the active reaction surface area which comes into contact with the starting material is smaller than in at least one subsequent second reaction zone (2, 3), and endothermic reforming for further breaking down the partially oxidized starting substance into a CO- and H₂-rich gas is carried out in at least one second reaction zone (2, 3), in which the active reaction surface area is larger than in at least one preceding first reaction zone (1).

2. Method according to Claim 1, **characterized in that** the reaction surface area increases in accordance with a drop in concentration of the reacting starting substance between the entry side and the exit side of the device.

3. Method according to Claim 1 or 2, **characterized in that** a monolithic structure made from ceramic or metal and having a cell or passage structure is used as support material (10a, 10b, 10c) for the catalytic material, the increase in the reaction surface area per unit volume being effected by a reduction in the hydraulic cross sections and/or a reduction in the material wall thickness of the passage structure in order to create an increased cell density in the catalytic material.

4. Method according to Claim 1, 2 or 3, **characterized in that** at least one mixing zone (4, 6) is used to homogenize differences in concentration of the reacting starting substance.

5. Method according to one of the preceding claims, **characterized in that** a first entry-side reaction zone (1) with a cell or passage density of 300 to 500, preferably 400 cpsi, a subsequent second reaction zone (2) with a cell density of 500 to 700, preferably 600 cpsi, and on the exit side a third reaction zone (3) with a cell density of 700 to 900, preferably 800 cpsi, are used.

6. Use of a device for the catalytic conversion of a starting substance, in particular of a liquid or gas mixture, by means of autothermal reforming, in which the starting substance, between an entry side of the device and an exit side of the device, is brought into active contact with a catalytic material, and the active reaction surface area of the catalytic material per unit volume which comes into contact with the starting substance to be converted increases in steps or continuously from the entry side to the exit side of the device, the catalytic material being applied to a support material, which is designed as a monolithic structure made from ceramic or metal and having a cell or passage structure, and the increase in the reaction surface area per unit volume being effected by a reduction in the hydraulic cross section and/or a reduction in the material wall thickness of the passage structure in order to create an increased cell density in the catalytic material, **characterized in that** a partial oxidation of hydrocarbons is carried out in at least one first reaction zone (1), in which the active reaction surface area which comes into contact with the starting material is smaller than in at least one subsequent second reaction zone (2, 3), and endothermic reforming for further breaking down the partially oxidized starting substance into a CO- and H₂-rich gas is carried out in at least one second reaction zone (2, 3), in which the active reaction surface area is larger than in at least one preceding first reaction zone (1).

7. Use according to Claim 6, **characterized in that** the reaction surface area increases in accordance with a drop in concentration of the reacting starting substance between the entry side and the exit side of the device.

8. Use according to Claim 6 or 7, **characterized in that** a monolithic structure made from ceramic or metal and having a cell or passage structure is used as support material (10a, 10b, 10c) for the catalytic material, the increase in the reaction surface area per unit volume being effected by a reduction in the hydraulic cross sections and/or a reduction in the material wall thickness of the passage structure in order to create an increased cell density in the catalytic material.

9. Use according to Claim 6, 7 or 8, **characterized in that** at least one mixing zone (4, 6) is used to homogenize differences in concentration of the reacting starting substance.

10. Use according to one of the preceding claims, **characterized in that** a first entry-side reaction zone (1) with a cell or passage density of 300 to 500, preferably 400 cpsi, a subsequent second reaction zone (2) with a cell density of 500 to 700, preferably 600 cpsi, and on the exit side a third reaction zone (3) with a cell density of 700 to 900, preferably 800 cpsi, are used.

## Revendications

1. Procédé pour la conversion catalytique d'un produit de départ, notamment d'un mélange fluide ou gazeux au moyen d'un reformage autothermique, dans lequel on fait réagir le produit de départ entre un côté entrée du dispositif et un côté sortie du dispositif à l'aide d'un matériau catalytique, et la surface de réaction effective du matériau catalytique opposée au produit de départ à convertir augmente de manière progressive ou continue par unité volumique depuis le côté entrée vers le côté sortie du dispositif, dans lequel le matériau catalytique est apposé sur un substrat, qui est formé comme une structure monolithique présentant une structure en canaux ou cellulaire en céramique ou en métal, et l'augmentation de la surface de réaction par unité volumique étant réalisée par réduction des sections hydrauliques et/ou réduction de l'épaisseur de la paroi du matériau de la structure en canaux pour atteindre une densité cellulaire élevée du matériau catalytique,
**caractérisé en ce que**,
dans au moins une première zone de réaction (1) dans laquelle la surface de réaction efficace opposée au produit de départ est inférieure à au moins une deuxième zone de réaction consécutive (2, 3), une oxydation partielle des hydrocarbures est réalisée, et dans au moins une deuxième zone de réaction (2, 3) dans laquelle la surface de réaction efficace est supérieure à au moins une première zone de réaction précédente (1), un reformage endothermique pour la décomposition supplémentaire du produit de départ partiellement oxydé en un gaz riche en CO et H₂ est réalisé.

2. Procédé selon la revendication 1, **caractérisé en ce que** la surface de réaction augmente proportionnellement à une chute de la concentration du produit de départ devant réagir entre le côté entrée et le côté sortie du dispositif.

3. Procédé selon la revendication 1 ou 2, **caractérisé en ce que** l'on utilise comme substrat (10a, 10b, 10c) du matériau catalytique une structure monolithique présentant une structure en canaux ou cellulaire en céramique ou en métal, l'augmentation de la surface de réaction par unité volumique étant réalisée par réduction des sections hydrauliques et/ou réduction de l'épaisseur de la paroi du matériau de la structure en canaux pour atteindre une densité cellulaire élevée du matériau catalytique.

4. Procédé selon la revendication 1, 2 ou 3, **caractérisé en ce que** l'on utilise au moins une zone de mélange (4, 6) pour l'homogénéisation des différences de concentration du produit de départ devant réagir.

5. Procédé selon l'une quelconque des revendications précédentes, **caractérisé en ce que** l'on utilise une première zone de réaction (1) du côté entrée, présentant une densité cellulaire ou de canal de 300 à 500 cpsi, de préférence de 400 cpsi, une deuxième zone de réaction (2) s'y raccordant présentant une densité cellulaire de 500 à 700 cpsi, de préférence de 600 cpsi, et une troisième zone de réaction (3) côté sortie, présentant une densité cellulaire de 700 à 900 cpsi, de préférence de 800 cpsi.

6. Utilisation d'un dispositif pour la conversion catalytique d'un produit de départ, notamment d'un mélange fluide ou gazeux, au moyen d'un reformage autothermique, dans laquelle on fait réagir le produit de départ entre un côté entrée du dispositif et un côté sortie du dispositif à l'aide d'un matériau catalytique, et la surface de réaction effective du matériau catalytique opposée au produit de départ à convertir augmente de manière progressive ou continue par unité volumique depuis le côté entrée vers le côté sortie du dispositif, dans laquelle le matériau catalytique est apposé sur un substrat, qui est formé comme une structure monolithique présentant une structure en canaux ou cellulaire en céramique ou en métal, et l'augmentation de la surface de réaction par unité volumique étant réalisée par réduction des sections hydrauliques et/ou réduction de l'épaisseur de la paroi du matériau de la structure en canaux pour atteindre une densité cellulaire élevée du matériau catalytique,
**caractérisée en ce que**,
dans au moins une première zone de réaction (1) dans laquelle la surface de réaction efficace opposée au produit de départ est inférieure à au moins une deuxième zone de réaction consécutive (2, 3), une oxydation partielle des hydrocarbures est réalisée, et dans au moins une deuxième zone de réaction (2, 3) dans laquelle la surface de réaction efficace est supérieure à au moins une première zone de réaction précédente (1), un reformage endothermique pour la décomposition supplémentaire du produit de départ partiellement oxydé en un gaz riche en CO et H₂ est réalisé.

7. Utilisation selon la revendication 6, **caractérisée en ce que** la surface de réaction augmente proportionnellement à une chute de la concentration du produit de départ devant réagir entre le côté entrée et le côté sortie du dispositif.

8. Utilisation selon la revendication 6 ou 7, **caractérisée en ce que** l'on utilise comme substrat (10a, 10b, 10c) du matériau catalytique une structure monolithique présentant une structure en canaux ou cellulaire en céramique ou en métal, l'augmentation de la surface de réaction par unité volumique étant réalisée par réduction des sections hydrauliques et/ou réduction de l'épaisseur de la paroi du matériau de la structure en canaux pour atteindre une densité cellulaire élevée du matériau catalytique.

9. Utilisation selon la revendication 6, 7 ou 8, **caractérisée en ce que** l'on utilise au moins une zone de mélange (4, 6) pour l'homogénéisation des différences de concentration du produit de départ devant réagir.

10. Utilisation selon l'une quelconque des revendications précédentes, **caractérisée en ce que** l'on utilise une première zone de réaction (1) du côté entrée, présentant une densité cellulaire ou de canal de 300 à 500 cpsi, de préférence de 400 cpsi, une deuxième zone de réaction (2) s'y raccordant présentant une densité cellulaire de 500 à 700 cpsi, de préférence de 600 cpsi, et une troisième zone de réaction (3) côté sortie, présentant une densité cellulaire de 700 à 900 cpsi, de préférence de 800 cpsi.
